# EUROPÄISCHE PATENTANMELDUNG

(11) **EP 0 945 176 A2**
(43) Veröffentlichungstag der Anmeldung: **29.09.1999**
(21) Anmeldenummer: 99106313.2
(22) Anmeldetag: 26.03.1999
(51) Int. Cl.: B01J 20/20, B01J 20/32

(54) **Faserförmige Adsorbentien**

(30) Priorität: 26.03.1998 DE 19813272
(71) Anmelder: Chmiel, Horst, Prof. Dr.-Ing.habil., 66123 Saarbrücken (DE)
(72) Erfinder: Chmiel, Horst, Prof. Dr.-Ing.habil., 66123 Saarbrücken (DE)
(74) Vertreter: Vièl, Christof, Dipl.-Ing.

(57) **Zusammenfassung**

Die Erfindung betrifft faserförmige Adsorbentien.

Bekannte Aktivkohlefasern zeichnen sich durch eine sehr enge Porenverteilung (wenige nm) aus, was sich u.a. in einer sehr guten Adsorptionskinetik bemerkbar macht. Sie sind dadurch besonders gut für die Entfernung geringer Verunreinigungen aus Wasser oder der Um- und Abluft (Geruchsstoff- bzw. Schadstoffentfernung) geeignet. Allerdings muß zu diesem Zweck aus der Aktivkohlenfaser zunächst ein Vlies, Gewebe, oder Gestrick hergestellt werden, aus dem dann wiederum ein Adsorbermodul, also ein technischer Apparat, hergestellt werden kann. Diese Fertigung ist allerdings mit einer extremen Staubentwicklung verbunden.

Ein weiterer Vorteil der Aktivkohlen-Vliese, -Gewebe und -Gestricke ist, daß sie - als Filter eingesetzt - gleichzeitig Partikelabscheidung und Schadstoffentfernung übernehmen können. Sie sind dann also gleichzeitig Filter und Adsorber. Derartige Filter könnten z.B. für die Zu- bzw. Umluftbehandlung von Reinräumen (OP-Säle, Produktionsräume der Elektroindustrie, etc.) eingesetzt werden. Sowohl bei der Herstellung der Vliese, Gewebe oder Gestricke als auch bei deren Einsatz als Filter ist es wichtig, daß keine Partikel freigesetzt werden.

Im Rahmen der Erfindung wird vorgeschlagen, daß die faserförmigen Adsorbentien mit einem Polymerfilm beschichtet sind.

## Beschreibung

Die Erfindung betrifft faserförmige Adsorbentien.

Adsorbentien werden bekanntlich wegen ihrer sehr hohen spezifischen Oberfläche (ca. 1.000 m²/g) für die Entfernung von Schadstoffen aus Fluiden (Wasser, Luft, Abgase, etc.) verwendet. Bestanden früher derartige Adsorbentien (wie z.B. Aktivkohle, Zeolithe, Silikate) aus Granulaten, die allenfalls zu größeren Partikeln extrudiert wurden, so werden neuerdings zunehmend auch faserförmige Adsorbentien produziert.

So lassen sich beispielsweise aus Polymerfäden durch Verkoken und anschließendes Aktivieren Aktivkohlefasern herstellen. Derartige Aktivkohlefasern zeichnen sich durch eine sehr enge Porenverteilung (wenige nm) aus, was sich u.a. in einer sehr guten Adsorptionskinetik bemerkbar macht. Sie sind dadurch besonders gut für die Entfernung geringer Verunreinigungen aus Wasser oder der Um- und Abluft (Geruchsstoff- bzw. Schadstoffentfernung) geeignet.

Allerdings muß zu diesem Zweck aus der Aktivkohlenfaser zunächst ein Vlies, Gewebe, oder Gestrick hergestellt werden, aus dem dann wiederum ein Adsorbermodul, also ein technischer Apparat, hergestellt werden kann. Diese Fertigung ist allerdings mit einer extremen Staubentwicklung verbunden.

Ein weiterer Vorteil der Aktivkohlen-Vliese, -Gewebe und -Gestricke ist, daß sie - als Filter eingesetzt - gleichzeitig Partikelabscheidung und Schadstoffentfernung übernehmen können. Sie sind dann also gleichzeitig Filter und Adsorber. Derartige Filter könnten z.B. für die Zu- bzw. Umluftbehandlung von Reinräumen (OP-Säle, Produktionsräume der Elektroindustrie, etc.) eingesetzt werden. Dazu ist es jedoch um so wichtiger, daß sie selbst keine Partikel freisetzen.

Aufgabe der Erfindung ist es somit, faserförmige Adsorbentien zu schaffen, aus denen Vliese, Gewebe und Gestricke hergestellt werden können, ohne daß es zu der beschriebenen Staubentwicklung bzw. der Partikelfreisetzung kommt, wobei jedoch die Adsorptionsfähigkeit nicht eingeschränkt werden soll.

Diese Aufgabe wird erfindungsgemäß dadurch gelöst, daß die faserförmigen Adsorbentien mit einem Polymerfilm beschichtet sind.

Der Erfindung liegt die Erkenntnis zugrunde, daß trotz der Ummantelung der faserförmigen Adsorbentien mit einem Polymerfilm überraschenderweise keine Verminderung der Adsorptionskapazität der Adsorbentien eintritt. Experimentelle Untersuchungen zeigten, daß für die meisten organischen Verbindungen hohe Diffusionsgeschwindigkeiten in dem Polymerfilm erreicht werden. Hinzu kommt, daß die Poren der Adsorbentien - wie bereits erwähnt - so klein sind, daß das Polymer dort nicht eindringen kann, sondern einen Film auf der Oberfläche der Adsorbentien bildet.

Eine Weiterbildung der Erfindung besteht darin, daß Vliese, Gewebe oder Gestricke aus faserförmigen Adsorbentien mit einem Polymerfilm beschichtet sind.

Produktionstechnisch kann es sinnvoll sein, fertige Vliese, Gewebe oder Gestricke aus den faserförmigen Adsorbentien mit einem Polymerfilm zu beschichten, statt diese Beschichtung an einzelnen Fasern vorzunehmen.

Eine Ausbildung der Erfindung besteht darin, daß daß Polymer des Polymerfilms hydrophob ist.

Hierdurch kann eine zusätzliche Selektivität erreicht werden. Beschichtet man beispielsweise eine Aktivkohlenfaser stark hydrophob, jedoch so, daß sich die zu entfernenden Schadstoffe (z.B. CKW) darin gut lösen, so werden diese gegenüber Wasser bevorzugt adsorbiert. Das Adsorbens ist also hydrophobisiert.

Es liegt im Rahmen der Erfindung, daß das Polymer des Polymerfilms ein elektrischer Isolator ist.

Dies kann, wie nachfolgend beschrieben wird, zur Regenerierung der Adsorbentien von Vorteil sein.

Vorteilhaft ist, daß das Polymer des Polymerfilms ein Polysiloxan ist.

In Polysiloxan werden für die meisten organischen Verbindungen hohe Diffusionsgeschwindigkeiten erreicht.

Erfindungsgemäß ist vorgesehen, daß das Polymer des Polymerfilms eine mikroporöse Membran bildet.

Beschichtet man beispielsweise eine Aktivkohlefaser mit einem Polymer, das seinerseits beim Eintritt in ein unmittelbar nachgeschaltetes Füllbad (z.B. ein Wasserbad) eine mikroporöse Membran (z.B. eine Ultrafiltrationsmembran) bildet, wird der Stofftransport zu der Aktivkohle verbessert.

Im Rahmen der Erfindung liegt auch, daß die faserförmigen Adsorbentien bzw. die Vliese, Gewebe oder Gestricke an den Faserenden nicht beschichtet sind.

Dies kann, wie nachfolgend beschrieben, für die Regeneration der Adsorbentien vorteilhaft genutzt werden.

Erfindungsgemäß ist vorgesehen, daß die faserförmigen Adsorbentien Aktivkohle-, Zeolith- oder Silikatfasern sind.

Im Rahmen der Erfindung liegt auch ein Verfahren zum Reinigen von Fluiden mittels erfindungsgemäßer faserförmiger Adsorbentien, wobei zur Regenerierung an nicht mit einem Polymerfilm ummantelten Enden von faserförmigen Adsorbentien bzw. von Vliesen, Geweben oder Gestricken aus den faserförmigen Adsorbentien eine elektrische Spannung angelegt wird.

Auf diese Weise kann entsprechend der DE 41 04 513 C2 das Adsorbens aufgeheizt und auf diese Weise regeneriert werden, ohne daß es zwischen dem gewickelten Material zu elektrischen Kurzschlüssen kommt. Auch die bei der thermischen Regeneration von Aktivkohle gefürchtete Brandgefahr wird durch die Polymerbeschichtung drastisch reduziert.

Schließlich ist erfindungsgemäß vorgesehen, daß faserförmige Adsorbentien bzw. Vliese, Gewebe oder Gestricke aus den faserförmigen Adsorbentien sowohl zur Filtration von Partikeln als auch zur Adsorbtion von Schadstoffen verwendet werden.

Im folgenden wird ein Ausführungsbeispiel dere Erfindung anhand von Zeichnungen erläutert.

Es zeigen
- Fig. 1 und Fig. 2: geschnittene Darstellungen eines erfindungsgemäßen faserförmigen Adsorbens,
- Fig. 3: eine schematische Darstellung eines faserförmigen Adsorbens, das für eine thermische Regeneration vorgesehen ist.

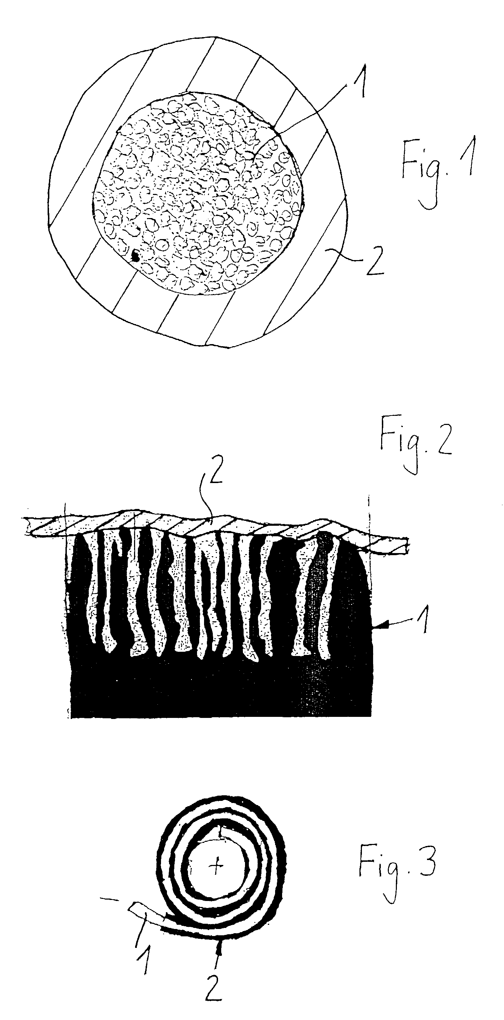

In Fig. 1 ist eine Darstellung einer quer geschnittenen Adsorbensfaser 1 dargestellt, die zeigt, daß die Adsorbensfaser auf ihrem gesamten Umfang mit einem Polymerfilm 2 beschichtet ist. Diese Beschichtung kann dadurch erfolgen, daß die Adsorbensfaser 1 oder ein daraus hergestelltes Vlies, Gewebe oder Gestrick durch ein Bad mit einer Polymerlösung zieht und das Lösemittel anschließend abdampft.

Die bevorzugte Dicke des Polymerfilms 2 beträgt zwischen einer monomolekularen Schicht und 5 µm Dicke. Dieser Polymerfilm 2 verhindert das Freisetzen von Partikeln aus der Adsorbensfaser 1, ohne jedoch die Adsorptionseigenschaften der Adsorbensfaser 1 zu beeinträchtigen. Insbesondere bei der Verwendung von Polysiloxan für die Herstellung des Polymerfilms 2 erhöht sich sogar die Adsorptionsgeschwindigkeit von organischen Verbindungen aus Wasser.

Aus dem in Fig. 2 gezeigten Längsschnitt läßt sich ersehen, daß der Polymerfilm 2 auf der Adsorbensfaser 1 eine dünne Schicht bildet und nicht in die sehr kleinen Poren der Adsorbensfaser 1 eindringen kann.

Fig. 3 zeigt schließlich eine Darstellung einer Bahn aus Adsorbensfasern 1, die mit Ausnahme der Enden der Adsorbensfasern 1 mit einem Polymerfilm 2 beschichtet ist. An das eine Ende der Adsorbensfasern 1 wird eine positive, an das andere Ende eine negative Spannung angelegt, wodurch die Bahn aus Adsorbensfasern 1 thermisch regeneriert werden kann. Aufgrund der elektisch isolierenden Beschichtung kann die Bahn aufgewickelt werden, ohne daß es zwischen den einzelnen Lagen zu Kurzschlüssen kommt.

## Patentansprüche

1. Faserförmige Adsorbentien in Form von Aktivkohlefasern zur Schadstoffentfernung aus Fluiden, **dadurch gekennzeichnet**, daß die faserförmigen Adsorbentien (1) mit einem Polymerfilm (2) beschichtet sind.

2. Faserförmige Adsorbentien gemäß Anspruch 1, **dadurch gekennzeichnet**, daß Vliese, Gewebe oder Gestricke aus faserförmigen Adsorbentien (1) mit einem Polymerfilm (2) beschichtet sind.

3. Faserförmige Adsorbentien gemäß Anspruch 1, **dadurch gekennzeichnet**, daß daß Polymer des Polymerfilms (2) hydrophob ist.

4. Faserförmige Adsorbentien gemäß Anspruch 1, **dadurch gekennzeichnet**, daß das Polymer des Polymerfilms (2) ein elektrischer Isolator ist.

5. Faserförmige Adsorbentien gemäß Anspruch 1, **dadurch gekennzeichnet**, daß das Polymer des Polymerfilms (2) ein Polysiloxan ist.

6. Faserförmige Adsorbentien gemäß Anspruch 1, **dadurch gekennzeichnet**, daß das Polymer des Polymerfilms (2) eine mikroporöse Membran bildet.

7. Faserförmige Adsorbentien gemäß Anspruch 1 oder 2, **dadurch gekennzeichnet**, daß die faserförmigen Adsorbentien (1) bzw. die daraus bestehenden Vliese, Gewebe oder Gestricke an den Faserenden nicht beschichtet sind.

8. Verfahren zum Reinigen von Fluiden mittels faserförmiger Adsorbentien gemäß den Ansprüchen 1 bis 7, **dadurch gekennzeichnet**, daß faserförmige Adsorbentien (1) bzw. Vliese, Gewebe oder Gestricke aus den faserförmigen Adsorbentien (1) sowohl zur Filtration von Partikeln als auch zur Adsorbtion von Schadstoffen verwendet werden.

9. Verfahren zum Reinigen von Fluiden gemäß Anspruch 8, **dadurch gekennzeichnet**, daß zur Regenerierung der faserförmigen Adsorbentien (1) an nicht mit einem Polymerfilm (2) ummantelten Enden aus den faserförmigen Adsorbentien (1) bzw. Vliesen, Geweben oder Gestricken aus den faserförmigen Adsorbentien (1) eine elektrische Spannung angelegt wird.
